# EUROPEAN PATENT APPLICATION

(11) **EP 1 443 437 A1**
(43) Date of publication of application: **04.08.2004**
(21) Application number: 02360363.2
(22) Date of filing: 18.12.2002
(51) Int. Cl.: G06F 17/60, H04M 15/00

(54) **A method, a mobile telecommunication device, a base station, and a computer software product for guiding a user of a mobile when intending invoking a service**

(71) Applicant: ALCATEL, 75008 Paris (FR)
(72) Inventor: Hoche, Michael Walter, Dr., 71701 Schwieberdingen (DE); Matt, Hans Jürgen, Dr., 71686 Remseck (DE); Szabo, Peter, Dr., 75180 Pforzheim (DE)
(74) Representative: Brose, Gerhard

(57) **Abstract**

The invention relates to an accounting advisor method for guiding a user of a mobile providing a service choice and invoking a selected service (P3), and account processing (P5, P6) at a subscriber's mobile telecommunication device that is enabled for processing multiple accounts and advising a user by further recording user behavior (P2), retrieving accounting information (P1), analyzing service and tariff constraints (P4, P5) based on recorded user behavior and retrieved accounting information, and deriving a recommended service and account selection (P7) based on said analyzing with respect to optimization criteria and optionally negotiating service and tariff characteristics (P6). The invention further relates to a mobile telecommunication device, a base station, and a computer software product.

## Description

The present invention relates to an accounting advisor method for guiding a user of a mobile when intending invoking a service. It further relates to a mobile telecommunication device, a base station, and computer software products.

Mobile phones with subscriber identification module (SIM) cards are well known. Even mobiles with multiple SIM cards either externally attached holders, described in the European patent application EP 0 785 634, or internally by managing multiple charging data, described in the US patent application US 5,956,653 are known, too.

Mobiles with accounting methods are known from the US patent application US 6,198,915 describing a mobile phone system with a mobile phone having internal accounting capabilities including a complex billing algorithm for calculating the account status on the fly.

When having or managing multiple accounts on current mobiles it is required exchanging somehow the SIM card choice for changing the account when invoking a service.

Beside that the current developments in the telecommunication market are very complex. There are a bunch of offers like pre-paid cards, location-dependent and time dependent accounting, volume dependent accounting etc.

In order to overcome the jungle of tariffs and the providers constraints the invention solves the problem of enhancing a service choice by taking into account what is known from US patent application US 6,198,915.

The problem is solved by an accounting advisor method for guiding a user of a mobile telecommunication device when intending invoking a service comprising the steps of providing a service choice and invoking a selected service, and account processing at a subscriber's mobile telecommunication device, wherein the mobile telecommunication device is enabled for processing multiple accounts and advising a user by retrieving accounting information (providers, prices, services, location, e.g. stored asynchronously in an account profile), analyzing service and tariff constraints (position, coverage, time duration, charging, etc.) based on recorded user behavior and retrieved accounting information, and deriving a recommended service and account selection based on said analyzing with respect to optimization criteria (cost, availability, service-type, maturity). The accounting method might further negotiating service and tariff characteristics, and the accounting method might recording user behavior (invoked services, charging, location) into a user profile.

The problem is further solved by a mobile telecommunication device adapted to guide a user when intending invoking a service, comprising an advisor unit recording user behavior, retrieving accounting information, analyzing service and tariff constraints, and deriving a recommended service and account selection, and by comprising a user interface for providing an accounting and service guidance based on said recommended service and account selection when invoking or intending to invoke a service or network logon. The mobile telecommunication device might be embedded within a notebook, a personal digital assistant, a personal computer, or a car-telematic system. The user interface might comprise a user interface for invoking a service or network logon with an accounting and service guidance when invoking a service by raising a menu with at least one recommended selection. And the user interface might comprise elements for providing additionally information on which a recommended selection is based. Preferably the user interface might comprise elements for providing additionally information (account profile, user profile) about consequences of a selection. And the user interface might comprise elements for providing application-context related information (e.g. reliable user-identification, account + service configuration settings, application-context related information on items such as e.g. banking- , health-, emergency-, home-watch, sport-event, stock-exchange information), known from former usage by the identified user.

And the problem is solved by a base station in a mobile telecommunication infrastructure adapted to enable a mobile telecommunication device guiding a user when intending invoking a service, wherein said base station and said mobile telecommunication device comprising accounting means that are enabled for exchanging accounting information based on accounting inquiries. The accounting means might be enabled for trading and answering on negotiation requests with service or tariff characteristics.

Furthermore the problem is solved by a computer software product for guiding a user of a mobile telecommunication device when intending invoking a service according to the described method, i.e. for recording user behavior, retrieving and processing accounting information, analyzing and evolving service or tariff constraints, and deriving a recommended account selection based on optimization criteria or strategies. Computer software product enhancements (optimization strategy) might be downloadable.

In other words the problem is solved by offering service and accounting (including the provider) alternatives.

A recommendation provides an increased benefit for a user by negotiating automatically within a mobile telecommunication infrastructure and deriving a recommendation and a rationale for.

A mobile is enhanced by a user interface comprising a selection for accounting and service characteristics. E.g. enabling a user selecting which SIM-card, account, provider, etc. has to be actually used when invoking a service or when logging into a network. This selection might be implemented using cascading menus comprising a list of available account names, service characteristics, and/or the providers' names.

An accounting method for managing multiple accounts should point out a recommended selection e.g. by matching recorded user behavior with gathered accounting information. The choice and the selection is preferably embedded into the usual mobile's control metaphor.

Accordingly, it is an object and advantage of the present invention is the easy and efficient use of multiple accounts, SIM-cards, providers, and offers within one mobile, which is e.g. convenient for travelling between countries, changing operators and providers.

A further advantage of the present invention is that the user is guided contingently to novel services and service offers.

These and many other objects and advantages of the present invention will become apparent to those of ordinary skill in the art from a consideration of the drawings and ensuing description.
**Figure. 1** is an accounting characteristics model for a mobile according to the invention.
**Figure. 2** is a user behavior model for a mobile according to the invention.
**Figure. 3** is a schematic drawing of processes illustrating the accounting method according to the invention.
**Figure. 4** is a schematic drawing of a user interface of a mobile according to the invention.
**Figure. 5** is a collaboration diagram of a mobile and of base stations according to the invention.

The invention is about negotiating and recommending an appropriate service offer according to a service request and presenting an appropriate recommendation (according to definable strategy) with a rationale in order to guide a user in an advantageous way.

By a service the complete set of functionalities provided by a mobile telecommunication infrastructure is meant. Examples for services are short message service, voice connection to fix network, any data and multimedia application, service configurations and settings, billing options, etc.

Authentication, authorization, and accounting is a term for a framework for intelligently controlling access to resources, enforcing policies, auditing usage, and providing the information necessary to bill for services. These combined processes are considered important for effective network management and security.

As the first process, authentication provides a way of identifying a user, typically by having the user enter a valid user identifier, e.g. name or telephone number and valid password or any biometrics input, e.g. today a personal identification number (PIN) before access is granted. The process of authentication is based on each user having a unique set of criteria for gaining access. The user's authentication credentials are compared with other user credentials stored elsewhere. If the credentials match, the user is granted access to the network and/or services. If the credentials are at variance, authentication fails and access is denied.

Following authentication, a user must gain authorization for doing certain tasks. After logging into a system/network, for instance, the user may try to issue service requests. The authorization process determines whether the user has the authority to issue such requests. Simply put, authorization is the process of enforcing policies: determining what types or qualities of activities, resources, or services a user is permitted. Usually, authorization occurs within the context of authentication. Once a user is authenticated, he or she may be authorized for different types of access or activity.

In practice the user builds and modifies his own service-profile with associated authorization procedures over time as he learns new items to use, even when not concretely realized.

The final piece of this framework is accounting, which measures the by a user consumed resources during access according to a cost metric. This can include the amount of system time or the amount of data a user has sent and/or received during a session or connection etc. Accounting is carried out by logging in/of session statistics according to characteristics and usage information and is used for authorization control, billing, trend analysis, resource utilization, predictive provision of information, and trading/negotiating activities.

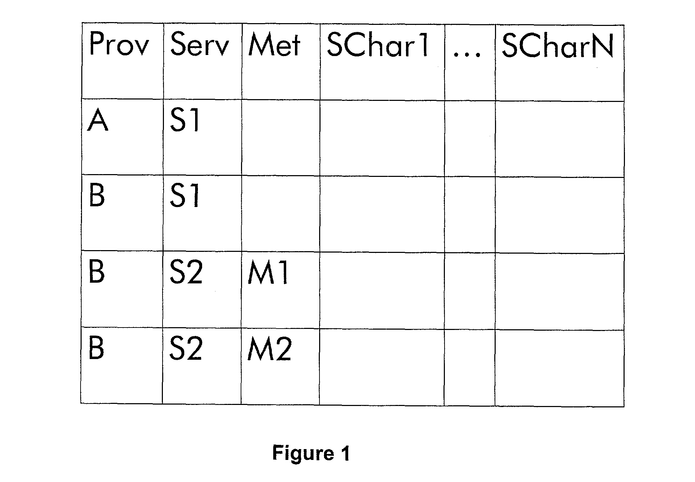

Figure. 1 shows a table comprising a provider column Prov, a service column Serv, a cost metric column Met, and further service characteristics columns SCharl, ..., SCharN.

The table realizes an accounting service characteristics model. Each line in the table corresponds to a service offer. Note that each service has its provider stated by the entry in column Prov, its identifier stated by the entry in the column Serv. Furthermore, each service offer has its characteristics namely the characteristics of the service e.g. availability, quality, etc. A service offer's cost metric, stated in cost metrics column Met provides the service tariff. Such a cost metric might be time dependent and/or duration dependent e.g. a usual voice call, or location dependent, e.g. an inland call or a foreign country call.

A service might be provided by multiple providers. The table contains entries illustrating a first service S1 that is provided by two providers A and B. It could even be that a service is provided twice with different cost metrics provided by the same provider. For instance the table shows that the second provider provides a service S2 twice, with cost metric M1 and M2.

It is preferable to have accounting characteristics model being up-to-date. Hence, it is preferred to maintained this model automatically. The information might be provided by providers itself using the mobile infrastructure within a logon procedure, or e.g. by invoking an extra service, e.g. a web service via wireless application protocol providing the necessary information for multiple providers. It is also possible that the model could be maintained manually or that the information is provided by a third party, e.g. as a special information service.

The metrics time and location dependency as well as the service constraints that are modeled within the services' characteristics and changing offers might require a synchronization of the real offers with the gathered information.

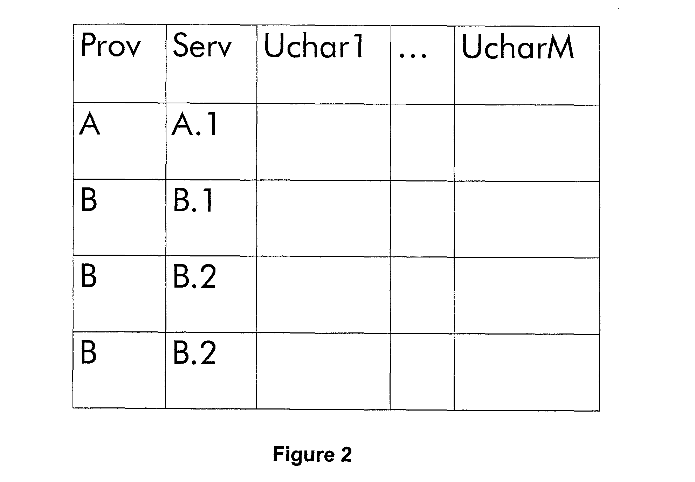

Figure. 2 shows a table comprising a provider column Prov, a service column Serv, and a set of columns for (service) usage UChar1, ..., UCharM.

The table realizes a user behavior model wherein the provider column Prov and the service column Serv correspond to the respective columns in the table of figure 1.

The set of columns for usage UChar1, ..., UCharM indicate service invocations information, i.e. invocation measurements like when, how long, where, what, how many, etc. An important column for usage might be cost, i.e. how much.

Note that the table entries are per user; and a row indicating a service usage. The table might be maintained and updated whenever a service is invoked. An aggregation of this table provides accounting overview, e.g. cost per provider or per service, or number of invocations per service and provider between two dates.

The rational of a recommendation might comprise such aggregated information enabling an improved cost awareness and transparence.

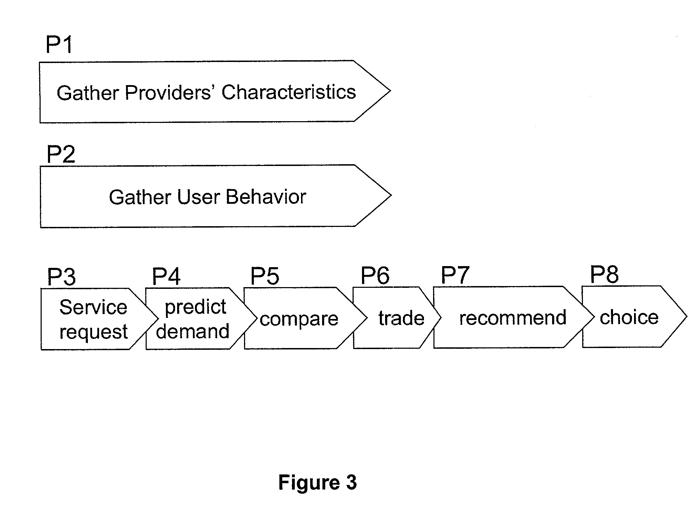

Figure. 3 shows a service offer evaluation process comprising 8 phases: a provider characteristics gathering phase P1, a user behavior gathering phase P2, a service request phase P3, a predict demand phase P4, a compare phase P5, a trade phase P6, a recommend phase P7, and a choice phase P8.

This picture provides an overview about the advising activities. There are two phases for gathering information namely the provider characteristics gathering phase P1 and the user behavior gathering phase P2. In the provider characteristics gathering phase P1 the accounting characteristics model is actualized according e.g. to location constraints, availability constraints, and timing constraints. In the user behavior gathering phase P2 user behavior is actualized according e.g. to service invocation events.

When a user requests a service, recognized within the service request phase P3, the accounting method is triggered performing some of these phases.

For estimating cost and comparing according to cost metrics and service characteristics the advisor unit predict or evaluate service usage characteristics like duration or message size for example within the predict demand phase P4. This is done in order to enable a comparison in the compare phase P5.

For comparable metrics like '3 credits per minute' compared to '4 credits per minute' a prediction is not necessary. But in the most cases the cost metrics are somehow incomparable, e.g. '3 credits per minute, but at least 3 minutes' compared to '5 credits a minute'. There the duration is crucial for deriving a recommendation. A user that is expected to use this service for 1 minute should be recommended to the second tariff, and a user that is expected to invoke the service for 10 minutes should be recommended to the first tariff.

Within the subsequent optional trade phase P6, the mobile could negotiate with the providers for a better tariff or an offer (bundle) using the comparison results, the provider characteristics, and the user behavior. The mobile could even deal by exchanging such information.

The result of the comparison is a recommendation, optionally with a rationale, provided to the user in the recommend phase P7. The recommendation enables within the choice phase P8 a service (offer) selection based on the illustrated evaluation.

Although not illustrated some phases might be iterated in order to improve the adaptation or matching of a user's request with the offered available services.

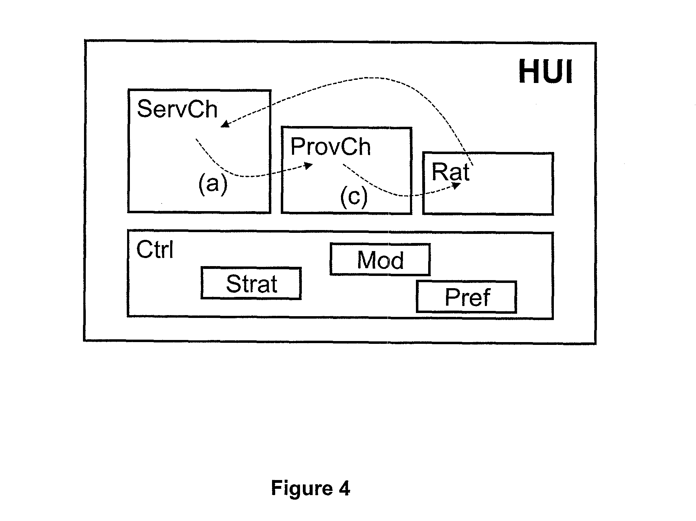

Figure. 4 shows a user interface structure assumed to be based on the menu guidance metaphor. The figure shows a man-machine user interface HUI comprising a service selection menu ServCh, a provider selection menu ProvCh, an explanation component Rat, and a control for configuration Crtl. The control for configuration Crtl comprises further a set of strategies Strat, a set of modes Mod, and a set of preferences Pref.

The user is guided by the user interface with recommendation, choice restrictions, and rationales in order to provide a user friendly and comprehensive impression.

Usually a service is selected by choosing it from a (cascading) menu, the service selection menu ServCh. When this choice is performed the accounting advisor means have to present the evaluation result of the accounting method, indicated by a first transition (a). The evaluation result is presented by the provider selection menu ProvCh. The menu might indicate provider names only or might be cascading allowing to drill down and investigating e.g. the service offers and the offered service's characteristics. It also could be plain or graphically enhanced providing the service offer alternatives. A user might be interested in detailed information about the evaluation. Therefore the explanation component Rat is intended providing a rationale about the recommendation or a ranking. Such information might initiate a user selecting another service, e.g. using an e-mailing service instead of a short message service because of the message size or the costs.

Advising a service needs a control for configuration Ctrl. Especially the strategy, i.e. what decision criteria have to be used when and how, needs to be configurable. For instance one user might be interested in the cheapest service offer where another user might be interested in separating business accounting from private accounting. Another user might be interested in choosing a service according to a quality aspect like data rate or a feature like image posting.

For the users convenience it is advantageous having several modes selectable from the set of modes Mod. Such modes could be a verbose mode with eloquent explanations, a silent mode with no explanations, a mode forcing negotiation, or a mode hiding any trading information.

The set of preferences Pref provides further configuration features like a provider or service ranking etc.

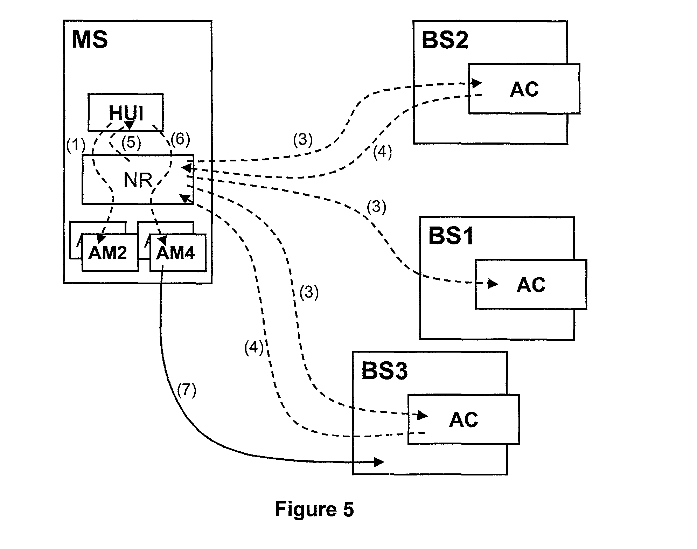

Figure. 5 is a collaboration diagram showing a mobile MS and three base stations BS1, BS2, and BS3. The mobile comprises a man-machine interface HUI, a negotiator and recommending component NR and several service access modules AM2, ..., AM4. Each of the base stations BS has an associated accounting component AC.

The diagram shows the collaboration between these components by the numbered arrows. A first arrow (1) begins at the man-machine interface HUI going through the negotiator and recommending component NR, and ends at a first service access module AM2. This first arrow (1) indicates a service request for the first service. The negotiator and recommending component NR and the corresponding first service access module AM2 are informed. Now the negotiator and recommending component NR tries to complete the accounting characteristics model for each provider by requesting via the arrows (3) corresponding accounting information from the accounting components AC associated to the base stations BS1, BS2, BS3. This step is for illustrative purpose. The accounting information could also be maintained asynchronously, e.g. manually or by a regular accounting information service invocation.

Two of the accounting components are assumed to reply via arrows (4) the actual accounting information, e.g. the offered cost metrics or service characteristics. A comparison or an optional negotiation re-using the connection between the accounting components AC and the negotiator and recommending component NR results in a set of offers and a recommendation provided via the flow (5) to the man-machine interface HUI. The user's final decision might trigger a second service access module AM4 invoking a corresponding service comprising even the user authentication via connection (7) from base station BS3.

Another scenario would be when the mobile MS information trades with the provider's base stations' accounting components AC by interchanging information about pricing and acceptance/rejections or competitive offers through the arrows (3) and (4).

The invention can be used with any type of mobile telecommunication service. The mobile telecommunication infrastructure could provide a background or a context about the services', especially service offers and characteristics like cost metrics. This might be done by a server within the infra structure for a set of providers, by each provider itself using his own infrastructure, or e.g. fixed configured in the handy or variable configurable, e.g. by entering updates manually or downloading the information via an external interface, e.g. an Internet service or a kind of memory module, e.g. a SIM card.

Accounting information to be read from e.g. the SIM-cards might be presented as a persistent software configuration in the mobile. This allows keeping the information without carrying a SIM card. It might also be necessary e.g. for copy protection reasons to read the SIM cards in a destructive mode when configuring the mobile persistent. Since SIM cards are personalized data memory, they shall have enough memory space to enable carrying all this information when the user decides to buy and use a new mobile phone.

For compatibility reasons it is preferable to bear infrastructure and mobiles in mind that do not have negotiation or recommendation or accounting components.

## Claims

1. An accounting advisor method for guiding a user of a mobile telecommunication device when intending invoking a service comprising the steps of
- providing a service choice and invoking a selected service (P3), and
- account processing (P5, P6) at a subscriber's mobile telecommunication device
**characterized in that** the mobile telecommunication device (MS) is enabled for processing multiple accounts and advising a user by further comprising the following steps
- retrieving accounting information (P1),
- analyzing service and tariff constraints (P4, P5) based on recorded user behavior and retrieved accounting information, and
- deriving a recommended service and account selection (P7) based on said analyzing with respect to optimization criteria.

2. The accounting advisor method according to claim 1 **characterized by** comprising a further step of negotiating service and tariff characteristics (P6).

3. The accounting advisor method according to claim 1 **characterized by** comprising a further step of recording user behavior (P2) into a user profile.

4. A mobile telecommunication device (MS) adapted to guide a user when intending invoking a service **characterized by** comprising an advisor unit (NR) recording user behavior, retrieving accounting information (P1), analyzing service and tariff constraints (P4, P5), and deriving a recommended service and account selection (P7), and by comprising a user interface (HUI) for providing an accounting and service guidance based on said recommended service and account selection when invoking or intending to invoke a service or network logon.

5. The mobile telecommunication device (MS) according to claim 4 **characterized by** being embedded within a notebook, a personal digital assistant (PDA), a personal computer, or a car-telematic system.

6. The mobile telecommunication device (MS) according to claim 4 **characterized in that** said user interface (HUI) comprises a user interface (ServCh) for invoking a service or network logon with an accounting and service guidance (ProvCh) when invoking a service by raising a menu with at least one recommended selection.

7. The mobile telecommunication device (MS) according to claim 4 **characterized in that** said user interface (HUI) comprises elements for providing additionally information (Rat) on which a recommended selection is based.

8. The mobile telecommunication device (MS) according to claim 4 **characterized in that** said user interface (HUI) comprises elements for providing additionally information (Rat) about consequences of a selection.

9. The mobile telecommunication device (MS) according to claim 4 **characterized in that** said user interface comprises (HUI) elements for providing application-context related information (Rat), known from former usage by the identified user.

10. A base station (BS1, BS2, BS3) in a mobile telecommunication infrastructure adapted to enable a mobile telecommunication device guiding a user when intending invoking a service, **characterized by** said base station (BS1, BS2, BS3) and said mobile telecommunication device (MS) comprising accounting means (NR, AC) that are enabled for exchanging accounting information based on accounting inquiries.

11. The base station (BS) according to claim 10 **characterized by** said accounting means (AC) are enabled for trading and answering on negotiation requests with service or tariff characteristics.

12. A computer software product for guiding a user of a mobile telecommunication device when intending invoking a service **characterized by** recording user behavior (P2), retrieving and processing accounting information (P4, P5, P6), analyzing and evolving service or tariff constraints (P5, P6), and deriving a recommended account selection (P7) based on optimization criteria or strategies.

13. The computer software product according to claim 12 **characterized by** having downloadable enhancements.
